# EUROPEAN PATENT APPLICATION

(11) **EP 3 185 138 A1**
(43) Date of publication of application: **28.06.2017**
(21) Application number: 15307111.3
(22) Date of filing: 22.12.2015
(51) Int. Cl.: G06F 17/30, G06K 9/00

(54) **METHOD AND APPARATUS FOR ACCELERATING A FEATURE POINT-BASED IMAGE COMPARISON, AND METHOD AND APPARATUS FOR IDENTIFYING ORIGIN IMAGES OF A QUERY IMAGE AMONG VIDEO IMAGES IN A DATABASE**

(71) Applicant: Thomson Licensing, 92130 Issy-les-Moulineaux (FR)
(72) Inventor: Winter, Marco, 30659 Hannover (DE)

(57) **Abstract**

The disclosure describes four kinds of special feature points, namely Protracted feature points, Object feature points, Unique feature points, and Spread feature points, all well suited for image comparison, and how to identify them. Then how to sequentially use the four kinds of special feature points to identify, in a large database of video images, origin images of a given query image (205).

## Description

### Field of the invention

The present invention relates to the area of image comparison, more particularly to the extraction and selection of feature points and feature point descriptors as criteria for image comparison.

### Background of the invention

In a video postproduction environment, identifying from which video image in a given set of video assets a given query image was derived is a recurring task known in the technical field as "backtracking". In the following, the outcome of backtracking a given query image will be denoted as its "origin" image or "origin" images.

For backtracking, feature point based image comparison can be used. There, feature points of the video images and feature points of the query image are derived. Feature points typically are described by a position information and a local neighborhood descriptor. The position information specifies where in an image a feature point was detected, and the descriptor specifies the image signal properties in a local neighborhood around the position. The descriptor does not comprise position information, so that comparing descriptors allows to compare visual similarity of local neighborhoods of feature points independent of their positions. Localizing feature points is typically based on finding local maxima of the output of a suitable contour filter.

Assuming that feature points have been derived for the query image as well as for all video images, the query image feature points are compared with the video images' feature points. Those one or more video images whose feature points have the best match compared to the query image feature points are considered as the backtracking result, i.e. as the origin images of the query image.

For backtracking applications, it is a matter of requirements and design, against which kinds and amounts of image manipulation the comparison shall be immune or agnostic. Immunity may for instance be requested against small amounts of aspect ratio change, against small amounts of cropping or re-scaling, against recoloring, against subtitling, or against insertion of virtual reality objects up to a certain size.

For derivation of feature points from images, algorithms known as "SIFT" or "SURF" exist. The "SIFT" algorithm is disclosed in D. G. Lowe: "Object recognition from local scale-invariant features", in Proceedings of International Conference on Computer Vision, pages 1150-1157, 1999**.** The "SURF" algorithm is disclosed in H. Bay et al.: "Speeded-Up Robust Features (SURF)", Computer Vision and Image Understanding (CVIU), Vol. 110, No. 3, pp. 346∼359, 2008**.**

However, in the area of image backtracking, the processing power requirements and the memory requirements of these algorithms may be seen as disadvantageous. Generally, the recognition quality increases with increasing number of feature points. Unfortunately, the required processing power increases with the increasing number of used feature points, too. In any case, the final identification of one or few of the video images as being the origin of a given query image is based on maximizing the number of matches of feature points or on maximizing a similarity criterion derived from the feature points.

Especially when the set of video assets comprises slowly varying or even static video, trying to identify a single most promising origin image requires large numbers of feature points.

US 2015/0103199 A1 to Pau says it discloses that compact descriptors of digital images are produced by detecting interest points representative of the digital images and selecting out of the interest points key points for producing e.g. local and global compact descriptors of the images. The digital images are decomposed into blocks by computing an energy (variance) for each said block and then subjecting the blocks to culling by rejecting those blocks having an energy failing to pass an energy threshold. The interest points are detected only in the blocks resulting from culling, and the key points for producing the compact descriptors are selected out of the interest points thus detected, possibly by using different selection thresholds for local and global compact descriptors, respectively. The number of key points for producing the compact descriptors may be varied e.g. by adaptively varying the number of the interest points detected in the blocks resulting from culling.

### Invention

The invention starts by noting that experiments have shown that, for exact backtracking in slowly varying video, certain ones of the feature points found in images are more relevant than others.

A decision criteria "highest number of matches" does not say anything about the needed absolute number of matches or even of the required number of feature points. There is no strong link between high absolute number of feature points and good recognition quality.

In order to reduce the number of feature points the here proposed approach is to find the relevant feature points as a basis for preferentially discarding the non-relevant feature points. In this, two situations must be explicitly taken into account:
- First, it is usually difficult to find a single best match for a given query image if the video images are temporally neighboring images, especially in the case of small changes in the video scene. The smaller the temporal changes, the more feature points are needed to reliably recognize differences. In the extreme, a firmly positioned camera may depict a static scenery, albeit as a sequence of individually captured images. For feature point based image backtracking, i.e. for deciding which of such nearly identical images most likely is the origin of the query image, this means that the only way to distinguish between neighboring images may be via the noise of the camera sensor.
- Secondly and in a kind of other extreme, comparing an image from one take with any image from a different take provides usually no matches at all or only very few matches. A significant number of matches are expected only for nearly identical scenes. This may happen if an identical scene is recorded twice, because the director was not happy with the previous take(s) of this scene. However, very similar scenes are exceptions, and most of the time different takes differ considerably.

It is the first situation that is the main reason for the huge amount of needed feature points. But, only for the case of slowly changing scenes. In rare cases identical scenes with a static camera in different takes or augmented reality may be further reasons. But, all other cases, when there is at least some motion, or a different scenery, need only a few relevant feature points to recognize that the query image won't match a currently tested video image.

With other words: The more similar the consecutive images in the database videos are, the more relevant becomes the number of matches. So far, it was not considered that specific feature points are more usable than others for distinguishing among similar consecutive video images.

Conceptually, the following kinds of feature points are proposed here as being more decisive than others:
- Feature points at the borders of objects, moving differently than at least part of their neighborhood, i.e. background;
- Feature points that change color, or feature points in color changing objects;
- Feature points that change lighting, or feature points in lighting changing objects.

Furthermore, relative positions of feature points between different moving objects have so far not been considered well.

Based on this, this disclosure aims to optimize the feature point selection. In a particularly advantageous way, such feature point selection is applied once to those feature point sets that are derived from the video images and then stored for subsequent usage.

The following approaches for accelerating a feature point-based image comparison are motivated in this disclosure:

### A) Protracted feature points

Going linearly through a sequence of video images and the associated feature points with their descriptors, one shall keep track of those descriptors for which sufficiently similar descriptors exist in subsequent images. Conceptually, this will detect feature points in static background or in slowly panned parts of the scenery. Note that for judging similarity, only the descriptors are compared so that the position of the feature points is completely irrelevant. This, together with a properly chosen threshold for judging sufficient similarity, is a simple way of keeping together all visually persistent features, regardless of whether they momentarily move or not. The descriptors that can be tracked over at least a significant number of consecutive images are then labelled as Protracted feature points, and are attributed with the first image number and the last image number of their existence in the video sequence. By this, the sheer number of descriptors to be taken into account for subsequent analysis steps is strongly reduced, which speeds up the search.

### B) Object feature points

Among the feature points of one video image, we look only at those where at least one sufficiently similar feature point exists in the subsequent video image. If more than one sufficiently similar feature point exists, we look at that one among them, which is most similar. Comparing the position of these best and sufficiently matching feature point pairs, a motion vector can be attributed to each of them. In this, the notions of "similar" or "matching" shall be based on comparing the descriptors, not the positions of the feature points.

Next, a suitably quantized histogram of the attributed motion vectors is generated. If in that histogram certain motion vectors (dx,dy) have been attributed more often than others, this means that the image pair depicts areas of homogeneous or spatially constant motion. The feature points associated with such prominent motion vectors will then be labelled as Object feature points, grouped by the associated motion vector. Object feature points are thus those feature points of an image, where the position of the best matching feature point in the subsequent image indicates a motion of sufficiently uniform direction and magnitude. They may or may not be spatially contagious.

### C) Unique feature points

For labelling certain feature points as Unique, we start with all detected feature points in an image, and in a first step unselect those whose descriptor is too similar to the descriptor of any other feature point in the same image. Conceptually, the remaining feature points are spatially unique. From this reduced set of feature points we then unselect those feature points where a too similar descriptor exists within the preceding or subsequent images. Conceptually, this two step derivation focuses on feature points at the boundary of moving objects and on feature points in areas where color and/or lighting changes. At the boundary of moving objects, a local neighborhood comprises parts from the background and parts from the moving object. In the subsequent image, either the background parts of the local neighborhood or the object parts of the local neighborhood or both will change, so that a descriptor derived from the local neighborhood can be expected to change at least in some of its dimensions.

In image areas where color and/or lighting changes, even if a visually prominent structural feature persists and is the basis for detecting a feature point, the average or low frequency signal component in the local neighborhood will change, so that the descriptor derived from the local neighborhood can be expected to change at least in some of its dimensions.

In summary, the feature points labelled as Unique are conceptually most suited for distinguishing against neighboring similar images.

### D) Spread feature points

In order to enable identification and comparison of images even in case of augmented reality, the present disclosure proposes to use feature points that are, as much as possible, spread homogenously over the entire image. In the following, we will denote such feature points as Spread feature points.

One way to derive the Spread feature points from an initial set of feature points of one image is to determine, from the feature point locations, a matrix of inter-feature point geometrical distances, to identify, using the matrix, those two feature points that are closest together, i.e. that have the smallest inter-feature point distance, and to deselect one of them. In general, deselecting in the sense of discarding one feature point amounts to deleting one row and one column in the inter-feature point distance matrix. Among the two feature points that are closest together, that one shall be deselected where the remaining matrix of inter-feature point distances has the bigger minimum distance. Conceptually, what is done here is to deselect preferentially those feature points that are close together, and to do it in such a way as to retain those feature points that are as much as possible evenly spread over the image. This method can be applied iteratively until a desired number of feature points or a desired average or minimum feature point distance has been reached.

A second way to derive the Spread feature points from the initial set of feature points is to define a grid of image positions of desirable properties, and then, for each grid position, retain that feature point from the initial set of feature points which is closest to that grid position. Duplicates may arise and can be eliminated in a subsequent step.

Further ways to derive the Spread feature points from the initial set of feature points exist for the case where the feature points come with any kind of scalar quality attribute assigned to them. Accordingly, a third way to derive the Spread feature points from the initial set of feature points comprises segmenting the image into regions of desired size and arrangement. This may for instance be square or rectangular or hexagonal regions. Within each region, only part of the initial feature points situated in that region is maintained, the others are deselected. In particular, the maintain/deselect decision may be based on the quality attribute of the feature points, in a sense that preferentially the best feature points are kept within each region.

A fourth way to derive the Spread feature points from the initial set of feature points comprises investigating the feature points in an order of decreasing quality. The one feature point having the highest quality is unconditionally labelled as a Spread feature point. Each subsequent investigated feature point is labelled as a Spread feature point only if it is far enough away from any and all previously labelled Spread feature points, with other words if the minimum of the geometric distances of the investigated feature point relative to all feature points momentarily labelled as Spread feature points is larger than a threshold value. If the investigated feature point is too close to at least one of the previously labelled Spread feature points, it is not labelled. This investigation continues through the sequence of quality-sorted feature points until either a predefined overall number of feature points has been labelled, or until the sequence is exhausted, or any other suitable terminating condition.

The scalar quality attribute can be a uniqueness attribute, for instance the Euclidian distance between the feature point's descriptor and the most similar descriptor of another feature point in the same image.

Given the four kinds of special feature points as defined above, the invention is based on the concept that only the above listed special feature points are really relevant for the final recognition quality. A feature point reduction based on these reduces the necessary amount of feature points significantly. Due to the different criteria used for identifying the four different kinds of special feature points, they may be used differently:

Coarse step: Identify those video images for which a match with the query image can categorically be excluded. For this, the Protracted feature points can best be used. If Protracted feature points have also been found for the query image, then only the Protracted feature points of the query image are compared with the Protracted feature points derived from the video images. If no Protracted feature points have been found for the query image, then all feature points of the query image are compared with the Protracted feature points derived from the video images. Those ranges of video images where only very few Protracted feature points match, can categorically be excluded from the subsequent analysis steps. Video images for which no Protracted feature points had been found, must be kept for subsequent analysis steps.

First refinement step: Compare Object feature points of the remaining video images. Compare them to Object feature points of the query image if Object feature points have been found for the query image. Compare them to all feature points of the query image if no Object feature points have been found for the query image. Compare the positions of the Object feature points having same motion vector. Video images where only very few Object feature points have same motion vector and same position, can further be excluded from subsequent analysis. If a sufficient match has been found for one video image, the origin of the query image has been found and the search can be terminated. If a sufficient match has been found for more than one video image, the analysis must be continued:
Second refinement step: Only for those video images that had a sufficient match in the first refinement step, compare Unique feature points with Unique feature points or with all feature points of the query image. Video images where too few Unique feature points match, shall again be excluded from subsequent analysis. If a sufficient match has been found for one or more video images, the origin of the query image has been found and the search can be terminated. If no sufficient match has been found for any video image, this will likely be a situation of augmented reality. The analysis must then be continued using the Spread feature points:

Third refinement step: Compare the Spread feature points of the query image with the Spread feature points of the remaining video images. Note that Spread feature points can always be determined for the query image, even when neighboring images of the query image are not available.

The use of different kinds of selected feature points allows a search in several steps. In each of the steps, the number of video images to analyze, and the number of feature points to base the analysis on is strongly reduced. This reduces computation time and memory requirement, hence increases the efficiency of the image comparison.

Instead of sequentially comparing the four different kinds of selected feature points on a more and more reduced set of candidate video images, the four comparisons may alternatively be run in parallel. The output of each comparison can be formulated into a probability, namely the probability, for each video image, that it constitutes the origin of the query image. Having such a per video image probability as the output of each comparison, it is straightforward to combine the four individual probabilities of each video image into one cumulating probability register. The resulting probability list can be analyzed, and the video image or images having the highest probabilities are the result of the search process.

Of course, a hybrid process will be the most practical approach. Even single search steps will discover the most non-relevant database images. So, with the probability approach the list of potential candidates will be longer over the whole search process, but at the end the final decision will base on a stronger information collection.

Note, that the refinement steps may be done in any order.

### Advantage

Eliminating the non-relevant feature points reduces feature point comparison effort at least proportionally, while maintaining a high correctness. Speed and/or throughput of feature point based image comparison can be improved at a conceptually small quality loss.

### Drawings

Exemplary embodiments of the invention are illustrated in the drawings and are explained in more detail in the following description.

In the figures:
- **Fig. 1**: symbolically illustrates an example scene depicting a background object and two moving foreground objects at three consecutive points in time.
- **Fig. 2**: symbolically illustrates a backtracking being done according to the present principles.

### Exemplary embodiments

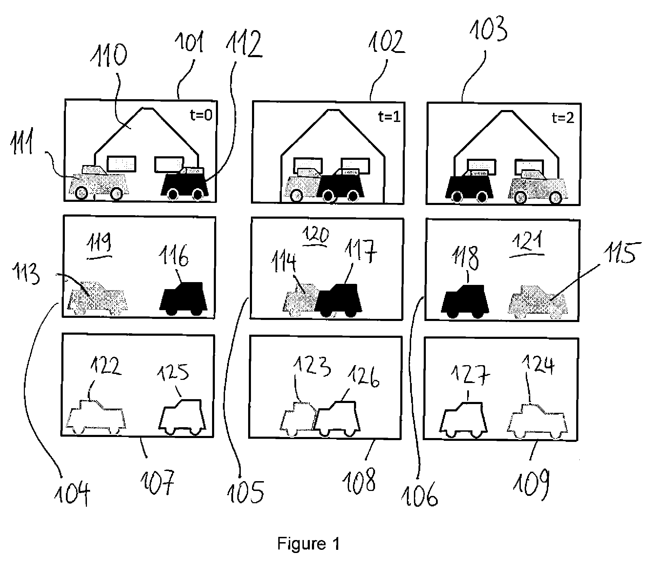

**Fig. 1** symbolically illustrates an example scene depicting a background object **110** and two moving foreground objects **111**, **112** at three consecutive points in time. The top left Figure part **101** illustrates the scene at a first time t=0, the top center Figure part **102** illustrates the scene at a second time t=1, the top right Figure part **103** illustrates the scene at a third time t=2.

Assuming that t=0 is earlier than t=1 and t=1 is earlier than t=2, the scene shows two cars **111**, **112** driving in opposite direction, and a static house **110** in the background.

It is assumed (not shown) that feature points have been detected all over the images. The middle row of Figure parts **104**, **105**, **106** symbolically illustrates those areas of the images where feature points are detected as being Object feature points. There are three groups of Object feature points having different motion vector. They are symbolically indicated as gray, black and white areas (background), with a different position for each time (t=0,1,2). Of course they correspond to the two moving cars **111**, **112**, and the static background with the house **110**.

The bottom row of figure parts **107**, **108**, **109** symbolically illustrates those image areas where Unique feature points will be detected: In an area close to the object contour of the car moving rightwards **122**, **123**, **124**, and in an area close to the object contour of the car moving leftwards **125**, **126**, **127**.

Protracted feature points will in this example be found in the background and in the black car all through the sequence (t=0...2). In the gray car they will only be found until the gray car gets hidden behind the black car, approximately at t=1.

Another, separate set of Protracted feature points will then be found for the gray car after the black car has passed in front of it, approximately between t=1 and t=2, when the black car does not hide the gray car any more.

It must be kept in mind, that in real life video scenes, not all feature points from t=0 to t=2 stay similar except their geometrical location. Several feature points will change significantly, e.g. due to reflections, shadows, rotating wheels, or semi-transparent windows etc.

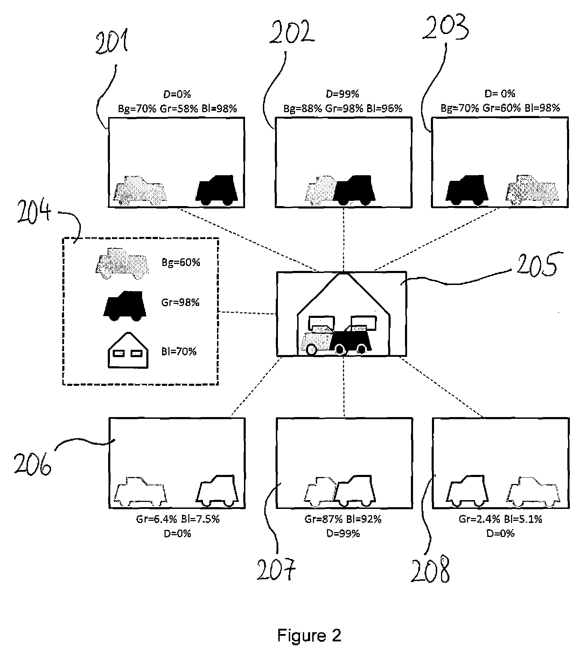

**Fig. 2** symbolically illustrates a backtracking being done according to the present principles. It is assumed that the true origin of the query image **205** is a manipulated t=1 image **102**, i.e. the same scenery as in **Fig.** 1. The manipulations may comprise color grading, cropping, and/or scaling. It is also assumed that the previous and following images of the query image **205** have been available, so that for the video images and for the query image Spread feature points, Object feature points, Protracted feature points, and Unique feature points were able to be determined.

The coarse step comparison based on the Protracted feature points can be assumed to eliminate any video images stemming from different scenes. This effect is not illustrated in **Fig. 2**.

Due to the strong motion in the scene, each of the image comparisons of the refinement steps should independently identify the true origin of the query image **205**. The image comparison based on Object feature points is symbolically indicated in the top row of Figure parts **201**, **202**, **203**. The image comparison based on Unique feature points is symbolically indicated in the bottom row of Figure parts **206**, **207**, **208**.

Each Figure part has a legend indicating the coincidence of the respective feature points with the query image feature points. The coincidence is measured in %, with 0% indicating complete unrelatedness, and 100% indicating identity. The percentages indicated with "D=" relate to coincidence of position information also denoted as "position coincidence" in the following. All other percentages relate to coincidence of feature point descriptors also denoted as "descriptor coincidence" in the following.

In the top row of Figure parts, Figure part **201** symbolizes the comparison of the query image with the t=0 image, based on Object feature points. The legend indicates, that the position coincidence is 0%, the descriptor coincidence of the Object feature points of the rightwards moving object is 70%, the descriptor coincidence of the Object feature points of the leftwards moving object is 58%, and the descriptor coincidence in the Object feature points of the static background is 98%.

Figure part **202** symbolizes the comparison of the query image with the t=1 image, based on Object feature points. The legend indicates, that the position coincidence is 99%, the descriptor coincidence of the Object feature points of the rightwards moving object is 88%, the descriptor coincidence of the Object feature points of the leftwards moving object is 98%, and the descriptor coincidence of the Object feature points of the static background is 96%. These uniformly high coincidences are an indication that the true origin of the query image has been found.

Figure part **203** symbolizes the comparison of the query image with the t=2 image, based on Object feature points. The legend indicates, that the position coincidence is 0%, the descriptor coincidence of the Object feature points of the rightwards moving object is 70%, the descriptor coincidence of the Object feature points of the leftwards moving object is 60%, and the descriptor coincidence of the Object feature points of the static background is 98%.

Figure part **204** is meant to symbolize the image comparison based on Protracted feature points and their strength of coincidence. As explained herein, the Protracted feature points cannot be allocated to single images but only to image subsequences. The legend in Figure part **204** indicates that the Protracted feature points in the rightwards moving car have a descriptor coincidence of 60%, the Protracted feature points in the leftwards moving car have a descriptor coincidence of 98%, and the Protracted feature points in the static background have a descriptor coincidence of 70%.

In the bottom row of Figure parts, Figure part **206** symbolizes the comparison of the query image with the t=0 image, based on Unique feature points. The legend indicates, that the position coincidence is 0%, the descriptor coincidence of the Unique feature points of the rightwards moving object is 6.4%, and the descriptor coincidence of the Unique feature points of the leftwards moving object is 7.5%.

Figure part **207** symbolizes the comparison of the query image with the t=1 image, based on Unique feature points. The legend indicates, that the position coincidence is 99%, the descriptor coincidence of the Unique feature points of the rightwards moving object is 87%, and the descriptor coincidence of the Unique feature points of the leftwards moving object is 92%.

Figure part **208** symbolizes the comparison of the query image with the t=2 image, based on Unique feature points. The legend indicates, that the position coincidence is 0%, the descriptor coincidence of the Unique feature points of the rightwards moving object is 2.4%, and the descriptor coincidence of the Unique feature points of the leftwards moving object is 5.1%.

With other words, the disclosure describes four kinds of special feature points, namely Protracted feature points, Object feature points, Unique feature points, and Spread feature points, all well suited for image comparison, and how to identify them. Then how to sequentially use the four kinds of special feature points to identify, in a large database of video images, origin images of a given query image 205.

## Claims

1. A **method** for accelerating a feature point-based comparison of a query image (205) with video images in a database (101, 102, 103), comprising:
- detecting, in the video images (101, 102, 103), video feature points having at least a position property;
- for each video feature point: deriving, from values of the respective image in a local neighborhood around the position of the video feature point, a video feature point descriptor as a vector of scalar properties of the neighborhood;
and **characterized by**:
- From an analysis based on at least one of: the positions of the video feature points and the descriptors of the video feature points, using an importance criteria to identify some of the video feature points as important and a remainder of the feature points as not important;
- storing the video feature points, their position properties, their descriptors, and their identification as important or not important, in a database memory;
- performing the feature point-based comparison by comparing feature points of the query image (205) with only the important video feature points from the database.

2. The method of Claim 1, where
- the analysis is based on the descriptors of the video feature points,
- the importance criteria is that for a descriptor in one video image (101) sufficiently similar descriptors exist in a sufficient number of subsequent video images (102, 103), and
- the important video feature points are identified as Protracted feature points.

3. The method of Claim 1, where
- the analysis is based on the positions of the video feature points and the descriptors of the video feature points,
- the importance criteria is to find a sufficiently similar descriptor in a predecessor (101) or subsequent (103) video image, where the difference of the positions indicates a prominently occurring motion vector, and
- the important video feature points are identified as Object feature points.

4. The method of Claim 1, where
- the analysis is based on the descriptors of the video feature points,
- the importance criteria is that for a descriptor in one video image (102) no sufficiently similar descriptors exist in the same video image (102) nor in the predecessor image (101) nor in the subsequent image (103), and
- the important video feature points are identified as Unique feature points.

5. The method of Claim 1, where
- the analysis is based on the positions of the video feature points
- the importance criteria is that the important feature points shall be evenly distributed over the image, and
- the important video feature points are identified as Spread feature points.

6. Method for identifying origin images of a query image (205) among video images in a database (101, 102, 103) for which Protracted feature points have been determined according to Claim 2, Object feature points have been determined according to Claim 3, Unique feature points have been determined according to Claim 4, and Spread feature points have been determined according to Claim 5,
the method comprising:
- determining feature points of the query image (205),
- deselecting those of the video images where too few Protracted feature points match the feature points of the query image (205),
- among the not deselected video images, deselecting those where too few Object feature points match the feature points of the query image (205),
- among the not deselected video images, deselecting those where too few Unique feature points match the feature points of the query image (205),
- among the not deselected video images, deselecting those where too few Spread feature points match the feature points of the query image (205),
- identifying the not deselected video images as the origin images (102).

7. An **apparatus** for accelerating a feature point-based comparison of a query image (205) with video images in a database (101, 102, 103), comprising a database memory and a processor operably connected to the database memory, where the processor is configured to
- detect, in the video images (101, 102, 103), video feature points having at least a position property;
- derive, for each video feature point, from values of the respective image in a local neighborhood around the position of the video feature point, a video feature point descriptor as a vector of scalar properties of the neighborhood;
and is **characterized by** being configured to:
- perform an analysis based on at least one of: the positions of the video feature points and the descriptors of the video feature points,
- use, in the analysis, an importance criteria to identify some of the video feature points as important and a remainder of the feature points as not important;
- store the video feature points, their position properties, their descriptors, and their identification as important or not important, in the database memory;
- perform the feature point-based comparison by comparing feature points of the query image (205) with only the important video feature points from the database memory.

8. The apparatus of Claim 7, where the processor is additionally configured to
- base the analysis on the descriptors of the video feature points,
- use as importance criteria that for a descriptor in one video image (101) sufficiently similar descriptors exist in a sufficient number of subsequent video images (102, 103), and
- identify the important video feature points as Protracted feature points.

9. The apparatus of Claim 7, where the processor is additionally configured to
- base the analysis on the positions of the video feature points and the descriptors of the video feature points,
- use as importance criteria to find a sufficiently similar descriptor in a predecessor (101) or subsequent (103) video image, where the difference of the positions indicates a prominently occurring motion vector, and
- identify the important video feature points as Object feature points.

10. The apparatus of Claim 7, where the processor is additionally configured to
- base the analysis on the descriptors of the video feature points,
- use as importance criteria that for a descriptor in one video image (102) no sufficiently similar descriptors exist in the same video image (102) nor in the predecessor image (101) nor in the subsequent image (103), and
- identify the important video feature points as Unique feature points.

11. The apparatus of Claim 7, where the processor is additionally configured to
- base the analysis on the positions of the video feature points
- use as importance criteria that the important feature points shall be evenly distributed over the image, and
- identify the important video feature points as Spread feature points.

12. Apparatus for identifying origin images of a query image (205) among video images in a database (101, 102, 103), comprising a database memory and a processor operably connected to the database memory, where the processor is configured to determine Protracted feature points of the video images according to Claim 8, configured to determine Object feature points of the video images according to Claim 9, configured to determine Unique feature points of the video images according to Claim 10, and configured to determine Spread feature points of the video images according to Claim 11,
the processor additionally configured to:
- determine feature points of the query image (205),
- deselect those of the video images where too few of the Protracted feature points match the feature points of the query image (205),
- deselect those among the not deselected video images, where too few of the Object feature points match the feature points of the query image (205),
- deselect those among the not deselected video images, where too few of the Unique feature points match the feature points of the query image (205),
- deselect those among the not deselected video images, where too few of the Spread feature points match the feature points of the query image (205), and to
- identify the not deselected video images as the origin images (102).
